# EUROPEAN PATENT SPECIFICATION

(11) **EP 4 117 981 B1**
(45) Date of publication and mention of the grant of the patent: **22.01.2025**
(21) Application number: 20710926.5
(22) Date of filing: 12.03.2020
(51) Int. Cl.: B62D 5/04, G07C 5/08

(54) **SYSTEM FOR DETERMINING A CONDITION OF A ROAD AND/OR AT LEAST ONE COMPONENT OF A CHASSIS SYSTEM OF A VEHICLE**
SYSTEM ZUR BESTIMMUNG EINES ZUSTANDS EINER STRASSE UND/ODER MINDESTENS EINER KOMPONENTE EINES FAHRWERKSYSTEMS EINES FAHRZEUGS
SYSTÈME DE DÉTERMINATION D'UN ÉTAT D'UNE ROUTE ET/OU D'AU MOINS UN ÉLÉMENT D'UN SYSTÈME DE CHÂSSIS D'UN VÉHICULE

(43) Date of publication of application: 18.01.2023
(73) Proprietor: HELLA GMBH & CO. KGAA, 59552 Lippstadt (DE)
(72) Inventor: DUBREUIL, Michael, 31410 Saint Sulpice sur Lèze (FR); FEUILLET, Charles-Henry, 31300 Toulouse (FR)
(86) International application number: PCT/EP2020/056612
(87) International publication number: WO 2021/180322

(56) References cited:
- EP-A1- 2 955 479
- DE-A1- 2 922 371
- DE-C2- 2 922 371
- JP-A- 2018 034 556
- US-A1- 2009 139 327
- US-A1- 2016 221 581
- US-A1- 2019 258 251

## Description

The invention is related to a system for determining a condition of a road and/or at least one component of a chassis system of a vehicle according to the independent system claim. Further, the invention is related to a method for determining a condition of a road and/or at least one component of a chassis system of a vehicle according to the independent method claim. Furthermore, the invention is related to a vehicle comprising a corresponding system according to the independent device claim. Vibration sensors are basically known. A known use of a vibration sensor is, for example, to detect vibrations on a steering column to provided appropriate damp of vibrations on the steering wheel as describe in US 2005/0173 915 A1. The use of the vibration sensor is here however limited to the damping.

Documents US2019/258251A1 and US2016/221581A1 show systems and methods according to the preamble of the independent claims.

The aim of the present invention is to provide a system comprising a vibration sensor and having a wide range of functionality. Especially is the aim of the present invention to provide a system for determining a condition of a road and/or at least one component of a chassis system of a vehicle, including a wheel, a tire, a suspension mechanism and/or a steering joint, with enlarged range of functionality which can be useful for different purposes inside and outside of the vehicle.

The invention provides according to the first aspect a system for determining a condition of a road and/or at least one component of a chassis system (of a steering axle) of a vehicle, the chassis system comprising a wheel, a wheel bearing, a tire, a suspension mechanism and/or a steering joint. The system comprises a steering mechanism for a steering axle of the vehicle and at least one vibration sensor for sensing perturbations of the chassis system of the vehicle, wherein the (at least one) vibration sensor is attached to at least one component of the steering mechanism.

The idea of the invention is to get information regarding perturbations on the wheels of the vehicle. These perturbations can come from the road (road condition, such as snow, water, rain, gravel, bumps or potholes) or from the wheel itself (unbalanced wheel, tire is default or suspension (including damper and/or spring and/or silent bloc) is not optimal). The perturbations will be recognized with help of the sensing data of the (at least one) vibration sensor (can be also called accelerometer) positioned an at least one component of the steering mechanism for the steering axle of the vehicle. The signal pattern issued form the sensing data of the (at least one) vibration sensor will be analyzed and used to supply information regarding a road condition or used as predictive maintenance input for chassis mechanism: tires, suspension and so on, and for steering mechanism.

The invention enables to provide information about the road condition with minimal equipment and with minimal computing effort. Also, the invention allows predictive maintenance for wheel, suspension mechanism and steering mechanism. The steering mechanism is mechanically connected to a wheel (and thus to a suspension mechanism) via a steering arm and a steering joint, such as ball joint. Furthermore, the only component that could filter the road perturbation between road surface and the steering system is the wheel. That's why the steering mechanism is one of the most appropriate mechanism in the vehicle to collect chassis and road perturbations. At least one vibration sensor will be placed on a steering arm (preferably two vibration sensors for both steering arms) and optionally on the steering rack which will be able to measure all these perturbations.

Furthermore, the invention may provide by a system for determining a condition of a road and/or at least one component of a chassis system of the vehicle that the (at least one) vibration sensor is provided as a piezoceramic sensor, a capacitive sensor or a strain gauge. By means of a piezoceramic sensor a cost-effective vibration sensor can be provided. By means of a capacitive sensor a vibration sensor can be provided having a high-resolution. A strain gauge is a simple element which can provide a cost-effective vibration sensor.

Also, the invention can provide by a system for determining a condition of a road and/or at least one component of a chassis system of the vehicle that the (at least one) vibration sensor is configured to provide information of perturbations of the chassis system of the vehicle on three axes of the vehicle. Thus, fine detection of different perturbations can be executed.

Moreover, the invention may provide by a system for determining a condition of a road and/or at least one component of a chassis system of the vehicle that the steering mechanism comprises an, especially central, actuator for steering arms for wheels of the steering axle of the vehicle. By means of an, especially central, actuator a simple steering mechanism, for example, mechanical steering mechanism, can be provided for both wheels.

The steering mechanism, especially the central actuator, can comprise a pinion gear and/or an electrical drive. A pinion gear creates a cost-effective and robust drive. An electrical drive can be useful for steer by wire systems.

Nevertheless, it is also possible to provide two individual actuators for each wheel of the steering axle of the vehicle. By means of two individual, for example, electrical, actuators for each wheel a flexible steering mechanism can be provided. A flexible steering mechanism can be used for protection against breaking out or oversteering the vehicle. In case of two individual actuators for each wheel, at least one vibration sensor can be provided for each steering arm of the corresponding actuator and optionally a second further vibration sensor to each actuator. That is, two or four vibration sensors can be provided.

According to a further advantage of the invention the steering mechanism can comprise a steering arm for each wheel of the steering axle of the vehicle. Thus, each wheel of the steering axle can be pivoted in a reliable manner.

Further, the invention may provide by a system for determining a condition of a road and/or at least one component of a chassis system of the vehicle that the steering arm acts directly on the wheel of the steering axle of the vehicle. According to the invention it is possible that the steering arm can be coupled to the wheel through a steering joint, for example, a ball joint. Thus, each wheel of the steering axle can be pivoted in a stable manner.

Furthermore, the invention may provide by a system for determining a condition of a road and/or at least one component of a chassis system of the vehicle that the (at least one) vibration sensor comprises two vibration sensors, wherein each of the two vibration sensors is attached to a corresponding steering arm of a corresponding wheel of the steering axle of the vehicle. That is, two or more vibration sensors can be provided. The two or more vibration sensors can be attached to the corresponding steering arm of the corresponding wheel of the steering axle of the vehicle and optionally to a further component of the steering mechanism, such as a steering rack. Already with two vibration sensors a representative detection for different perturbations of the road and/or the chassis system of the vehicle can be achieved. With more than two sensors a detection for different perturbations can be refined and/or validated.

Moreover, the invention may provide by a system for determining a condition of a road and/or at least one component of a chassis system of the vehicle that the (at least one) vibration sensor comprises individual vibration sensors attached to a steering rack and to each steering arm of each wheel of the steering axle of the vehicle. That is, three vibration sensors can be provided to achieve comprehensive overview about a condition of a road and of different components of a chassis system of the vehicle.

Further on, the invention may provide by a system for determining a condition of a road and/or at least one component of a chassis system of the vehicle that at least one central control unit is provided for receiving and/or processing sensing data from the (at least one) vibration sensor. The (at least one) central control unit can then receive and analyze sensing data of the (at least one) vibration sensor in order to obtain information regarding a road condition and/or a condition of a chassis system of the vehicle.

Also, the invention may provide by a system for determining a condition of a road and/or at least one component of a chassis system of the vehicle that the at least one central control unit comprises individual control units for each vibration sensor for receiving and/or processing sensing data from the corresponding vibration sensor. Thus, each vibration sensor can be separately analyzed.

In continue, the invention provides a system for determining a condition of a road and/or at least one component of a chassis system of the vehicle wherein the (at least one) control unit comprises a memory unit for saving individual vibration pattern for different perturbations of the road and of different components of the chassis system of the vehicle. Each vibration pattern can characterize different perturbations. Thus, a simple way to analyze the sensing data of the (at least one) sensor can be provided. The individual vibration pattern can be selected by the (at least one) sensor and then recorded by the (at least one) control unit in a test run of the vehicle. Also, the individual vibration pattern can be selected by the (at least one) sensor and/or updated by the (at least one) control unit during normal operation of the vehicle. Furthermore, the invention may provide by a system for determining a condition of a road and/or at least one component of a chassis system of the vehicle that the individual vibration pattern for different perturbations of the chassis system of the vehicle comprise vibration pattern for perturbations of a wheel, wheel bearing, a tire, a suspension mechanism and/or steering joint. Also, the individual vibration pattern for different perturbations of the road can comprise vibration pattern for rain, snow, water, rain, gravel, bumps or potholes on the road. Perturbations of a wheel can be treated equally or correspondingly to perturbations of a road. The individual vibration pattern can be recorded for particular situations or perturbations. Characterizing vibration pattern can then be recognized and assigned to corresponding perturbation. Moreover, the invention may provide by a system for determining a condition of a road and/or at least one component of a chassis system of the vehicle that the individual vibration pattern for different perturbations of the road and of the different components of the chassis system of the vehicle are provided as a map (that is a set of characteristic curves). In this way, a simple assignment of different perturbations to corresponding vibration pattern can be performed.

Additionally, the invention may provide by a system for determining a condition of a road and/or at least one component of a chassis system of the vehicle that the (at least one) control unit is configured to determine and/or update the individual vibration pattern depending on current sensing data of the (at least one) vibration sensor. Thus, the map can be updated and/or refined to provide a true and correct statement about a current condition of a road and/or of components of a chassis system. Advantageously, the invention may provide by a system for determining a condition of a road and/or at least one component of a chassis system of the vehicle that the (at least one) control unit is configured as a separate control unit or is implemented into a central control unit of the vehicle. A separate control unit can be useful for an autonomous system. An implemented control unit can extend the functionality of the central control unit of the vehicle.

The invention provides according to the second aspect a method for determining a condition of a road and/or at least one component of a chassis system of a vehicle, especially comprising a wheel, a wheel bearing, a tire, a suspension mechanism and/or a steering joint, comprising following steps:
1) providing sensing data by at least one vibration sensor being attached to at least one component of a steering mechanism for a steering axle of the vehicle,
2) determining a perturbation of the road and/or of the at least one component of the chassis system of the vehicle depending on the sensing data of the (at least one) vibration sensor by at least one control unit, and
3) providing individual vibration pattern (s) for different perturbations (I, II, III, IV, V) of the road (2) and of different components (21, 22, 23, 24, 25) of the chassis system (20) of the vehicle (1) by at least one control unit (30).

With help of the inventive method the same advantages can be achieved as with help of the inventive system described above. Full reference is made to these advantages in the present case.

Individual vibration pattern can characterize different perturbations. By means of individual vibration pattern different perturbations can be analyzed and recognized easily. The individual vibration pattern can be recorded and/or updated in a test run of the vehicle and/or during normal operation of the vehicle.

In continue, the invention may provide by a method for determining a condition of a road and/or at least one component of a chassis system of the vehicle that in step 3) the individual vibration pattern for different perturbations of the chassis system of the vehicle comprise vibration pattern for perturbations of a wheel, a wheel bearing, a tire, a suspension mechanism and/or steering joint. Also, in step 3) the individual vibration pattern for different perturbations of the road can comprise vibration pattern for rain snow, water, rain, gravel, bumps or potholes on the road. Thus, different perturbations can be allocated to a right origin between the road and steering mechanism. Furthermore, the invention may provide by a method for determining a condition of a road and/or at least one component of a chassis system of the vehicle that in step 3) the individual vibration pattern for different perturbations of the road and/or of different components of the chassis system of the vehicle are provided as a map (that is set of characteristic curves). The map can provide a simple way how to assign detected vibration pattern to the corresponding perturbations, that is to the right origin. Moreover, the invention may provide by a method for determining a condition of a road and/or at least one component of a chassis system of the vehicle that in step 3) the individual vibration pattern for different perturbations of the road and of different components of the chassis system of the vehicle are recorded and/or updated by the control unit depending on current sensing data from the (at least one) vibration sensor and/or are received from a memory unit of the control unit.

Advantageously, a method for determining a condition of a road and/or at least one component of a chassis system of the vehicle can comprise at least one following step:
4) sending an information about a determined condition of the road to a road traffic office for road construction purposes and/or to a navigation services provider for updating an information regarding to the road.

In this way, the information obtained by the inventive method can be made available for use with the public in an advantageous way.

According to another advantage of the invention, a method for determining a condition of a road and/or at least one component of a chassis system of the vehicle can comprise at least one following step:
the method comprising at least one of the following steps:
5) (optical and/or acoustical) displaying an information about a determined condition of the at least one component of the chassis system to a user of the vehicle, and/or
6) providing a recommendation to a user of the vehicle to repair the at least one component of the chassis system dependent on a determined condition of this component.

In this way, the information obtained by the inventive method can be made available to the user of the vehicle in an advantageous way.

The invention provides according to the third aspect a vehicle comprising a system for determining a condition of a road and/or at least one component of a chassis system of the vehicle which can be configured as described above. With help of the inventive vehicle the same advantages can be achieved as with help of the inventive method and/or system described above. Full reference is made to these advantages in the present case.

Based on the attached drawings, the invention will be explained in more detail below. Thereby showing:
- Fig. 1: a schematic view of a system for determining a condition of a road and/or at least one component of a chassis system of a vehicle within the meaning of the invention
- Fig. 2: A schematic explanation of a method for determining a condition of a road and/or at least one component of a chassis system of a vehicle within the meaning of the invention

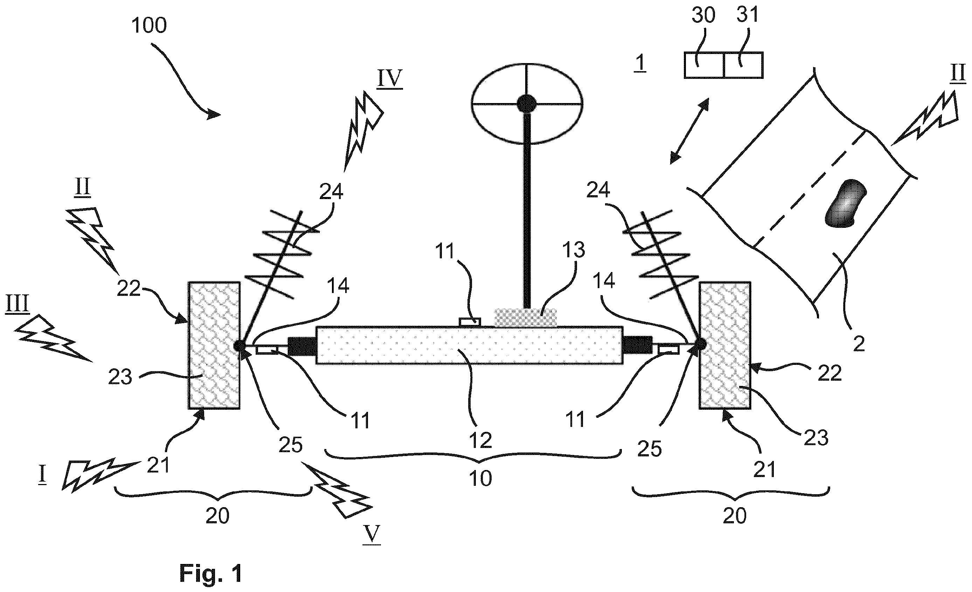

Figure 1 shows a first aspect of the present invention. The invention provides a system 100 for determining a condition of a road 2 and/or at least one component 21, 22, 23, 24, 25 of a chassis system 20 of a steering axle of a vehicle 1. The chassis system 20 comprises a wheel 21, a wheel bearing 22, a tire 23, a suspension mechanism 24 and/or a steering joint 25 to a steering mechanism 10 of the steering axle. The inventive system 100 comprises the steering mechanism 10 for the steering axle of the vehicle 1 and at least one vibration sensor 11 for sensing perturbations I**,** II, III, IV, V of the chassis system 20 of the vehicle 1, wherein the (at least one) vibration sensor 11 is attached to at least one component 12, 14 of the steering mechanism 10.

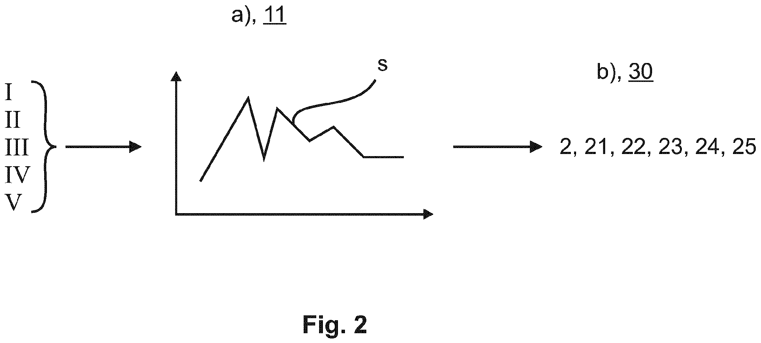

Also the figures 1 and 2 show five examples of possible perturbations I, II, III, IV, V. It should be clear that the number of perturbations I, II, III, IV, V according to the invention can be less or more and is not limited to the shown examples.

The sensing data of the vibration sensor 11 helps to get information regarding (different and recognizable) perturbations I**,** II, III, IV, V on the wheels 21 of the vehicle 1. These perturbations I**,** II, III, IV, V can come from the road 2 because of the road condition, such as snow, water, rain, gravel, bumps or potholes or from the wheel 21 itself because of an unbalanced wheel 21, default tire 23 or not optimal suspension mechanism 24 (including damper and/or spring and/or silent bloc). The perturbations will be recognized with help of the sensing data of the (at least one) vibration sensor 11 (can be also called accelerometer) positioned an at least one component 12, 14 of the steering mechanism 10 for the steering axle of the vehicle 1. The signal pattern issued form the sensing data of the (at least one) vibration sensor 11 will be analyzed and used to determine a road 2 condition or used as predictive maintenance input for chassis mechanism 20 and/or steering mechanism 10.

The (at least one) vibration sensor 11 according to the invention can be provided as a piezoceramic sensor, a capacitive sensor or a strain gauge.

The figure 1 shows schematically that the steering mechanism 10 comprises an, especially central, actuator 12, 13 for steering arms 14 for wheels 21 of the steering axle of the vehicle 1. The actuator 12, 13 can comprise a pinion gear and/or an electrical drive. Instead of a central actuator 12, 13 two individual actuators for each wheel 21 of the steering axle of the vehicle 1 can be provided.

As the figure 1 shows, the steering mechanism 10, especially the actuator 12, 13 can further comprise a steering arm 14 for each wheel 21 of the steering axle of the vehicle 1 (two steering arms 14 in all). Each of the two steering arms 14 can preferably act directly over a steering joint 25 on the wheel 21 of the steering axle of the vehicle 1, that is without another levers. The steering joint 25 can be, for example, provided as a ball joint.

As the figure 1 indicates, the (at least one) vibration sensor 11 can comprise two vibration sensors 11, wherein each of the two vibration sensors 11 can be attached to a corresponding steering arm 14 of a corresponding wheel 21 of the steering axle of the vehicle 1. That is, two vibration sensors 11 can be provided. Optionally a third vibration sensor 11 can be attached to a further component of the steering mechanism 10, such as steering rack 12. Already with two vibration sensors 11 a representative detection for different perturbations I, II, III, IV, V of the road 2 and/or the chassis system 20 of the vehicle 1 can be achieved. With three sensors 11 a detection for different perturbations I**,** II, III, IV, V can be realized more accurately.

Further on figures 1 and 2 show, that at least one central control unit 30 can be provided for receiving and/or processing sensing data from the (at least one) vibration sensor 11. The at least one central control unit 30 can also comprise individual control units (not shown) for each vibration sensor 11 for receiving and/or processing sensing data from the corresponding vibration sensor 11.

As figures 1 and 2 schematically indicate, the (at least one) control unit 30 can comprise a memory unit 31 for saving individual vibration pattern for different perturbations I, II, III, IV, V of the road 2 and/or of different components 21, 22, 23, 24, 25 of the chassis system 20 of the vehicle 1. Each vibration pattern can characterize different perturbations I, II, III, IV, V.

The individual vibration pattern for different perturbations I**,** II, III, IV, V can be stored as a map (that is a set of characteristic curves) for a simple assignment of different perturbations I, II, III, IV, V to corresponding vibration pattern sensed by the (at least one) vibration sensor 11.

The control unit 30 within the meaning of the invention can be configured to determine and/or update the individual vibration pattern depending on current sensing data of the (at least one) vibration sensor 11. Thus, the map can be updated and/or refined.

The control unit 30 within the meaning of the invention can be configured as a separate control unit or is implemented into a central control unit of the vehicle.

Figure 2 should serve to visualize a method according to the invention for determining a condition of a road 2 and/or at least one component 21, 22, 23, 24, 25 of a chassis system 10 of the vehicle 1, especially comprising a wheel 21, a wheel bearing 22, a tire 23, a suspension mechanism 24 and/or a steering joint 25, comprising following steps:
1) providing sensing data by at least one vibration sensor 11 being attached to a steering mechanism 10 for a steering axle of the vehicle 1,
2) determining a perturbation of the road 2 and/or of the at least one component 21, 22, 23, 24, 25 of the chassis system 20 of the vehicle 1 depending on the sensing data of the (at least one) vibration sensor 11 by at least one control unit 30.

The method according to the invention can comprise at least one following step:
3) providing individual vibration pattern for different perturbations I, II, III, IV, V of the road 2 and/or of different components 21, 22, 23, 24, 25 of the chassis system 20 of the vehicle 1 by at least one control unit 30.

Individual vibration pattern s can characterize different perturbations **I,** II, III, IV, V such as perturbations I**,** II, III, IV, V of a wheel 21, a wheel bearing 22, a tire 23, a suspension mechanism 24 and/or steering joint 25 and/or such as perturbations I**,** II, III, IV, V of the road 2, like snow, water, rain, gravel, bumps or potholes. The shown examples should not limit the number of possible perturbations I, II, III, IV, V which can be determined with help of the invention.

The individual vibration pattern for different perturbations I, II, III, IV, V of the road 2 and/or of different components 21, 22, 23, 24, 25 of the chassis system 20 of the vehicle 1 can be provided as a map (that is set of characteristic curves).

The individual vibration pattern s for different perturbations I**,** II, III, IV, V of the road 2 and/or of different components 21, 22, 23, 24, 25 of the chassis system 20 of the vehicle 1 can be recorded and/or updated by the control unit 30 depending on current sensing data from the (at least one) vibration sensor 11 and/or are simply received from a memory unit 31 of the control unit 30.

Furthermore, the method can comprise at least one following step:
4) sending an information about a determined condition of the road 2 to a road traffic office for road construction purposes and/or to a navigation services provider for updating an information regarding to the road.

Moreover, the method can comprise at least one of the following steps:
5) (optical and/or acoustical) displaying an information about a determined condition of the at least one component 21, 22, 23, 24, 25 of the chassis system 20 to a user of the vehicle 1, and/or
6) providing a recommendation to a user of the vehicle 1 to repair the at least one component 21, 22, 23, 24, 25 of the chassis system 20 dependent on a determined condition of this component 21, 22, 23, 24, 25.

In the end the figures 1 and 2 indicate that a vehicle 1 comprising a corresponding system 100 as described above produces also an aspect of the present invention. The preceding description of the figures describes the present invention just within the framework of examples. Of course, individual features of the embodiments can be freely combined with each other, provided it is technically reasonable, without leaving the scope of the claims.

### Reference signs

- 100: system
- 10: steering mechanism
- 11: vibration sensor
- 12, 13: actuator
- 12: steering rack
- 13: steering pinion
- 14: steering arm
- 20: chassis system
- 21: wheel
- 22: wheel bearing
- 23: tire
- 24: suspension mechanism
- 25: steering joint
- 1: vehicle
- 2: road
- I: perturbation
- II: perturbation
- III: perturbation
- IV: perturbation
- V: perturbation
- s: vibration pattern

## Claims

1. System (100) for determining a condition of a road (2) and/or at least one component (21, 22, 23, 24, 25) of a chassis system (20) of a vehicle (1), comprising:
a steering mechanism (10) for a steering axle of the vehicle (1) and
at least one vibration sensor (11) for sensing perturbations (I, II, III, IV, V) of the chassis system (20) of the vehicle (1),
wherein the vibration sensor (11) is attached to at least one component (12, 14) of the steering mechanism (10),
wherein at least one central control unit (30) is provided for receiving and/or processing sensing data from the vibration sensor (11),
**characterized in**
**that** the control unit (30) comprises a memory unit (31) for saving individual vibration pattern (s) for different perturbations (I, II, III, IV, V) of the road (2) and of different components (21, 22, 23, 24, 25) of the chassis system (20) of the vehicle (1).

2. System (100) according to claim 1,
**characterized in that**,
the vibration sensor (11) is provided as a piezoceramic sensor, a capacitive sensor or a strain gauge,
and/or the vibration sensor (11) is configured to provide information of perturbations (I, II, III, IV, V) of the chassis system (20) of the vehicle (1) on three axes of the vehicle (1).

3. System (100) according to claim 1 or 2,
**characterized in that**,
the steering mechanism (10) comprises an actuator (12, 13) for two steering arms (14) for two wheels (21) of the steering axle of the vehicle (1), and/or the steering mechanism (10) comprises a pinion gear and/or an electrical drive.

4. System (100) according to one of the preceding claims,
**characterized in that**,
the steering mechanism (10) comprises a steering arm (14) for each wheel (21) of the steering axle of the vehicle (1).

5. System (100) according to the preceding claim,
**characterized in that**,
the steering arm (14) acts directly on the corresponding wheel (21) of the steering axle of the vehicle (1),
and/or the steering arm (14) is coupled to the wheel (21) through a steering joint (24), especially in form of ball joint.

6. System (100) according to one of the preceding claims,
**characterized in that**,
the vibration sensor (11) comprises two vibration sensors (11), wherein each of the two vibration sensors (11) is attached to a corresponding steering arm (14) of a corresponding wheel (21) of the steering axle of the vehicle (1).

7. System (100) according to one of the preceding claims,
**characterized in that**,
the vibration sensor (11) comprises individual vibration sensors (11) attached to a steering rack (12) and to each steering arm (14) of each wheel (21) of the steering axle of the vehicle (1).

8. System (100) according to one of the preceding claims,
**characterized in that**,
the central control unit (30) comprises individual control units for each vibration sensor (11) for receiving and/or processing sensing data from the corresponding vibration sensor (11).

9. System (100) according to one of the preceding claims,
**characterized in that**,
the individual vibration pattern (s) for different perturbations (I, II, III, IV, V) of the chassis system (20) of the vehicle (1) comprise vibration pattern (s) for perturbations (I, II, III, IV, V) of a wheel (21), a wheel bearing (22), a tire (23), a suspension mechanism (24) and/or a steering joint (25), and/or the individual vibration pattern (s) for different perturbations (I, II, III, IV, V) of the road (2) comprise vibration pattern (s) for rain snow, water, rain, gravel, bumps or potholes on the road (2).

10. System (100) according to one of the preceding claims,
**characterized in that**,
the individual vibration pattern (s) for different perturbations (I, II, III, IV, V) of the road (2) and/or of the different components (21, 22, 23, 24, 25) of the chassis system (20) of the vehicle (1) are provided as a map.

11. System (100) according to one of the preceding claims,
**characterized in that**,
the control unit (30) is configured to determine and/or update the individual vibration pattern (s) depending on current sensing data of the vibration sensor (11).

12. System (100) according to one of the preceding claims,
**characterized in that**,
the control unit (30) is configured as a separate control unit or is implemented into a central control unit of the vehicle.

13. Method for determining a condition of a road (2) and/or at least one component (21, 22, 23, 24, 25) of a chassis system (20) of a vehicle (1), comprising following steps:
1) providing sensing data by at least one vibration sensor (11) being attached to at least one component (12, 14) of a steering mechanism (10) for a steering axle of the vehicle (1),
2) determining a perturbation of the road (2) and/or of the at least one component (21, 22, 23, 24, 25) of the chassis system (20) of the vehicle (1) depending on the sensing data of the vibration sensor (11) by at least one control unit (30),
**characterized in that**,
the method comprising at least one following step:
3) providing individual vibration pattern (s) for different perturbations (I, II, III, IV, V) of the road (2) and of different components (21, 22, 23, 24, 25) of the chassis system (20) of the vehicle (1) by at least one control unit (30).

14. Method according to the preceding claim,
**characterized in that**,
in step 3) the individual vibration pattern (s) for different perturbations (I, II, III, IV, V) of the chassis system (20) of the vehicle (1) comprise vibration pattern (s) for perturbations (I, II, III, IV, V) of a wheel (21), a wheel bearing (22), a tire (23), a suspension mechanism (24) and/or a steering joint (25), and/or in step 3) the individual vibration pattern (s) for different perturbations (I, II, III, IV, V) of the road (2) comprise vibration pattern (s) for rain snow, water, rain, gravel, bumps or potholes on the road (2).

15. Method according to one of the preceding claims,
**characterized in that**,
in step 3) the individual vibration pattern (s) for different perturbations (I, II, III, IV, V) of the road (2) and/or of different components (21, 22, 23, 24, 25) of the chassis system (20) of the vehicle (1) are provided as a map.

16. Method according to one of the preceding claims,
**characterized in that**,
in step 3) the individual vibration pattern (s) for different perturbations (I, II, III, IV, V) of the road (2) and/or of different components (21, 22, 23, 24, 25) of the chassis system (20) of the vehicle (1) are recorded and/or updated by the control unit (30) depending on current sensing data from the vibration sensor (11) and/or are received from a memory unit (31) of the (at least one) control unit (30).

17. Method according to one of the preceding claims,
**characterized in that**,
the method comprising at least one following step:
4) sending an information about a determined condition of the road to a road traffic office for road construction purposes and/or to a navigation services provider for updating an information regarding to the road.

18. Method according to one of the preceding claims,
**characterized in that**,
the method comprising at least one of the following steps:
5) displaying an information about a determined condition of the at least one component (21, 22, 23, 24, 25) of the chassis system (20) to a user of the vehicle (1), and/or
6) providing a recommendation to a user of the vehicle (1) to repair the at least one component (21, 22, 23, 24, 25) of the chassis system (20) dependent on a determined condition of this component (21, 22, 23, 24, 25).

19. Vehicle (1) comprising a system (100) according one of the preceding claims 1 to 12.

## Patentansprüche

1. System (100) zur Bestimmung des Zustands einer Fahrbahn (2) und/oder mindestens einer Komponente (21, 22, 23, 24, 25) eines Fahrwerkssystems (20) eines Fahrzeugs (1), umfassend:
einen Lenkmechanismus (10) für eine Lenkachse des Fahrzeugs (1) und mindestens einen Vibrationssensor (11) zum Ermitteln von Störungen (I, II, III, IV, V) des Fahrwerkssystems (20) des Fahrzeugs (1),
wobei der Vibrationssensor (11) an mindestens einer Komponente (12, 14) des Lenkmechanismus (10) angebracht ist,
wobei mindestens ein Zentralsteuergerät (30) zum Empfangen und/oder Verarbeiten von Sensordaten aus dem Vibrationssensor (11) vorhanden ist,
**dadurch gekennzeichnet, dass**
das Steuergerät (30) eine Speichereinheit (31) umfasst zum Speichern eines oder mehrerer individueller Vibrationsmuster für verschiedene Störungen (I, II, III, IV, V) der Fahrbahn (2) und solcher verschiedener Komponenten (21, 22, 23, 24, 25) des Fahrwerkssystems (20) des Fahrzeugs (1).

2. System (100) nach Anspruch 1,
**dadurch gekennzeichnet, dass**
der Vibrationssensor (11) als piezokeramischer Sensor, kapazitiver Sensor oder Dehnungsmesser ausgeführt ist,
und/oder der Vibrationssensor (11) so konfiguriert ist, dass er Informationen zu Störungen (I, II, III, IV, V) des Fahrwerkssystems (20) des Fahrzeugs (1) in drei Achsen des Fahrzeugs (1) liefert.

3. System (100) nach Anspruch 1 oder 2,
**dadurch gekennzeichnet, dass**
der Lenkmechanismus (10) einen Aktuator (12, 13) für zwei Lenkarme (14) für zwei Räder (21) der Lenkachse des Fahrzeugs (1) umfasst,
und/oder, dass der Lenkmechanismus (10) ein Ritzelgetriebe und/oder einen elektrischen Antrieb umfasst.

4. System (100) nach einem der vorstehenden Ansprüche,
**dadurch gekennzeichnet, dass**
der Lenkmechanismus (10) einen Lenkarm (14) für jedes Rad (21) der Lenkachse des Fahrzeugs (1) umfasst.

5. System (100) nach dem vorstehenden Anspruch,
**dadurch gekennzeichnet, dass**
der Lenkarm (14) direkt auf das entsprechende Rad (21) der Lenkachse des Fahrzeugs (1) wirkt,
und/oder der Lenkarm (14) an das Rad (21) gekoppelt ist durch ein Lenkgelenk (24), insbesondere in Form eines Kugelgelenks.

6. System (100) nach einem der vorstehenden Ansprüche,
**dadurch gekennzeichnet, dass** der Vibrationssensor (11) aus zwei Vibrationssensoren (11) besteht, wobei jeder der zwei Vibrationssensoren (11) an dem zugehörigen Lenkarm (14) eines zugehörigen Rades (21) der Lenkachse des Fahrzeugs (1) angebracht ist.

7. System (100) nach einem der vorstehenden Ansprüche,
**dadurch gekennzeichnet, dass**
der Vibrationssensor (11) aus einzelnen Vibrationssensoren (11) besteht, die an einem Lenkgetriebe (12) und an jedem Lenkarm (14) jedes Rades (21) der Lenkachse des Fahrzeugs (1) angebracht sind.

8. System (100) nach einem der vorstehenden Ansprüche,
**dadurch gekennzeichnet, dass**
das Zentralsteuergerät (30) aus einzelnen Steuergeräten für jeden Vibrationssensor (11) zum Empfangen und/oder Verarbeiten von Sensordaten aus dem entsprechenden Vibrationssensor (11) besteht.

9. System (100) nach einem der vorstehenden Ansprüche,
**dadurch gekennzeichnet, dass**
das/die einzelne(n) Vibrationsmuster für verschiedene Störungen (I, **II,** III, IV, V) des Fahrwerkssystems (20) des Fahrzeugs (1) verschiedene Vibrationsmuster umfasst/umfassen für Störungen (I, II, III, IV, V) eines Rades (21), eines Radlagers (22), eines Reifens (23), eines Federungsmechanismus (24) und/oder eines Lenkgelenks (25),
und/oder die verschiedenen Vibrationsmuster für verschiedene Störungen (I, II, III, IV, V) der Fahrbahn (2) Vibrationsmuster für Schneeregen, Wasser, Regen, Schotter, Unebenheiten oder Schlaglöcher auf der Fahrbahn (2) umfassen.

10. System (100) nach einem der vorstehenden Ansprüche,
**dadurch gekennzeichnet, dass**
die verschiedenen Vibrationsmuster für verschiedene Störungen (I, II, III, IV, V) der Fahrbahn (2) und/oder verschiedener Komponenten (21, 22, 23, 24, 25) des Fahrwerkssystems (20) des Fahrzeugs (1) als Karte bereitgestellt werden.

11. System (100) nach einem der vorstehenden Ansprüche,
**dadurch gekennzeichnet, dass**
das Steuergerät (30) so konfiguriert ist, dass es die einzelnen Vibrationsmuster abhängig von den aktuellen Sensordaten des Vibrationssensors (11) ermittelt und/oder aktualisiert.

12. System (100) nach einem der vorstehenden Ansprüche;
**dadurch gekennzeichnet, dass**
das Steuergerät (30) als separates Steuergerät konfiguriert oder in ein Zentralsteuergerät des Fahrzeugs integriert ist.

13. Methode zur Bestimmung des Zustands einer Fahrbahn (2) und/oder mindestens einer Komponente (21, 22, 23, 24, 25) eines Fahrwerkssystems (20) eines Fahrzeugs (1), folgende Schritte umfassend:
1) Bereitstellen von Sensordaten aus mindestens einem Vibrationssensor (11), der an mindestens einer Komponente (12, 14) eines Lenkmechanismus (10) für eine Lenkachse des Fahrzeugs (1) angebracht ist,
2) Ermitteln einer Störung der Fahrbahn (2) und/oder mindestens einer Komponente (21, 22, 23, 24, 25) des Fahrwerkssystems (20) des Fahrzeugs (1) abhängig von den Sensordaten des Vibrationssensors (11) durch mindestens ein Steuergerät (30),
**dadurch gekennzeichnet, dass**
die Methode mindestens einen nachfolgenden Schritt umfasst:
3) Bereitstellen einzelner Vibrationsmuster für verschiedene Störungen (I, II, III, IV, V) der Fahrbahn (2) und/oder verschiedener Komponenten (21, 22, 23, 24, 25) des Fahrwerkssystems (20) des Fahrzeugs (1) durch mindestens ein Steuergerät (30).

14. Methode nach dem vorstehenden Anspruch,
**dadurch gekennzeichnet, dass**
in Schritt 3) das/die einzelne(n) Vibrationsmuster für verschiedene Störungen (I, II, III, IV, V) des Fahrwerkssystems (20) des Fahrzeugs (1) Vibrationsmuster umfassen für Störungen (I, II, III, IV, V) eines Rades (21), eines Radlagers (22), eines Reifens (23), eines Federungsmechanismus (24) und/oder eines Lenkgelenks (25), und/oder in Schritt 3) das/die einzelne(n) Vibrationsmuster für verschiedene Störungen (I, II, III, IV, V) der Fahrbahn (2) Vibrationsmuster umfassen für Schneeregen, Wasser, Regen, Schotter, Unebenheiten oder Schlaglöcher auf der Fahrbahn (2).

15. Methode nach einem der vorstehenden Ansprüche,
**dadurch gekennzeichnet, dass**
in Schritt 3) das/die einzelne(n) Vibrationsmuster für verschiedene Störungen (I, II, III, IV, V) der Straße (2) und/oder verschiedener Komponenten (21, 22, 23, 24, 25) des Fahrwerkssystems (20) des Fahrzeugs (1) als Karte bereitgestellt werden.

16. Methode nach einem der vorstehenden Ansprüche,
**dadurch gekennzeichnet, dass**
in Schritt 3) das/die einzelne(n) Vibrationsmuster für verschiedene Störungen (I, II, III, IV, V) der Straße (2) und/oder verschiedener Komponenten (21, 22, 23, 24, 25) des Fahrwerkssystems (20) des Fahrzeugs (1) durch das Steuergerät (30) aufgezeichnet und/oder aktualisiert werden, abhängig von den aktuellen Sensordaten aus dem Vibrationssensor (11) und/oder aus einer Speichereinheit (31) des (mindestens eines) Steuergeräts (30) abgerufen werden.

17. Methode nach einem der vorstehenden Ansprüche,
**dadurch gekennzeichnet, dass**
die Methode mindestens einen nachfolgenden Schritt umfasst:
4) Senden einer Information über einen ermittelten Zustand der Fahrbahn an eine Straßenverkehrsbehörde für straßenbauliche Zwecke und/oder an einen Navigationsdatendienstleister zur Aktualisierung von Informationen über die Fahrbahn.

18. Methode nach einem der vorstehenden Ansprüche,
**dadurch gekennzeichnet, dass**
die Methode mindestens einen der folgenden Schritte umfasst:
5) Anzeigen einer Information über einen ermittelten Zustand mindestens einer Komponente (21, 22, 23, 24, 25) des Fahrwerkssystems (20) an den Nutzer des Fahrzeugs (1) und/oder
6) Bereitstellen einer Empfehlung an den Nutzer des Fahrzeugs (1) zum Reparieren der mindestens einen Komponente (21, 22, 23, 24, 25) des Fahrwerkssystems (20) abhängig von einem ermittelten Zustand dieser Komponente (21, 22, 23, 24, 25).

19. Fahrzeug (1) umfassend ein System (100) nach einem der vorstehenden Ansprüche 1 bis 12.

## Revendications

1. Système (100) permettant de déterminer l'état d'une route (2) et/ou d'au moins un composant (21, 22, 23, 24, 25) d'un système de châssis (20) d'un véhicule (1), comprenant :
un mécanisme de direction (10) pour un essieu directeur du véhicule (1) et au moins un capteur de vibrations (11) pour détecter les perturbations (I, II, III, IV, V) du système de châssis (20) du véhicule (1),
sachant que le capteur de vibrations (11) est fixé à au moins un composant (12, 14) du mécanisme de direction (10),
sachant qu'au moins une unité de commande centrale (30) est prévue pour recevoir et/ou traiter les données de détection du capteur de vibrations (11),
**caractérisé en ce que**
l'unité de commande (30) comprend une unité de mémoire (31) pour la sauvegarde de modèles de vibrations individuels (s) pour différentes perturbations (I, II, III, IV, V) de la route (2) et de différents composants (21, 22, 23, 24, 25) du système de châssis (20) du véhicule (1).

2. Système (100) selon la revendication 1,
**caractérisé en ce que**
le capteur de vibrations (11) est un capteur piézocéramique, un capteur capacitif ou une jauge de déformation,
et/ou le capteur de vibrations (11) est configuré de manière à fournir des informations sur les perturbations (I, II, III, IV, V) du système de châssis (20) du véhicule (1) sur trois axes du véhicule (1).

3. Système (100) selon la revendication 1 ou 2, **caractérisé en ce que**
le mécanisme de direction (10) comprend un actionneur (12, 13) pour deux bras de direction (14) pour deux roues (21) de l'essieu directeur du véhicule (1),
et/ou le mécanisme de direction (10) comprend un pignon et/ou un entraînement électrique.

4. Système (100) selon l'une des revendications précédentes,
**caractérisé en ce que**
le mécanisme de direction (10) comprend un bras de direction (14) pour chacune des roues (21) de l'essieu directeur du véhicule (1).

5. Système (100) selon la revendication précédente,
**caractérisé en ce que**
le bras de direction (14) agit directement sur la roue correspondante (21) de l'essieu directeur du véhicule (1),
et/ou le bras de direction (14) est accouplé à la roue (21) par l'intermédiaire d'une articulation de direction (24), notamment sous la forme d'une rotule.

6. Système (100) selon l'une des revendications précédentes,
**caractérisé en ce que**
le capteur de vibrations (11) désigne deux capteurs de vibrations (11), chacun de ces capteurs de vibrations (11) étant fixé sur le bras de direction correspondant (14) de l'une des roues (21) de l'essieu directeur du véhicule (1).

7. Système (100) selon l'une des revendications précédentes,
**caractérisé en ce que**
le capteur de vibrations (11) désigne deux capteurs de vibrations individuels (11) fixés à une crémaillère (12) et sur chaque bras de direction (14) de chaque roue (21) de l'essieu directeur du véhicule (1).

8. Système (100) selon l'une des revendications précédentes,
**caractérisé en ce que**
l'unité de commande centrale (30) comprend des unités de commande individuelles pour chaque capteur de vibrations (11) prévues pour recevoir et/ou traiter les données de détection reçues du capteur de vibrations correspondant (11).

9. Système (100) selon l'une des revendications précédentes, **caractérisé en ce que**
le modèle de vibrations individuel (s) pour différentes perturbations (I, II, III, IV, V) du système de châssis (20) du véhicule (1) comprend des modèles de vibrations (s) pour des perturbations (1, II, III, IV, V) d'une roue (21), d'un roulement de roue (22), d'un pneu (23), d'un mécanisme de suspension (24) et/ou d'une articulation de direction (25),
et/ou le modèle de vibrations individuel (s) pour différentes perturbations (I, II, III, IV, V) de la route (2) comprend des modèles de vibrations (s) pour pluie et neige mêlées, eau, pluie, graviers, bosses ou nids-de-poule sur la route (2).

10. Système (100) selon l'une des revendications précédentes,
**caractérisé en ce que**
les modèles de vibrations individuels (s) pour différentes perturbations (I, II, III, IV, V) de la route (2) et/ou des différents composants (21, 22, 23, 24, 25) du système de châssis (20) du véhicule (1) sont fournis sous forme de carte.

11. Système (100) selon l'une des revendications précédentes,
**caractérisé en ce que**
l'unité de commande (30) est configurée pour déterminer et/ou mettre à jour le modèle de vibrations individuel (s) en fonction des données de détection actuelles du capteur de vibrations (11).

12. Système (100) selon l'une des revendications précédentes,
**caractérisé en ce que**
l'unité de commande (30) est configurée comme une unité de commande séparée ou est intégrée dans une unité de commande centrale du véhicule.

13. Procédé permettant de déterminer l'état d'une route (2) et/ou d'au moins un composant (21, 22, 23, 24, 25) d'un système de châssis (20) d'un véhicule (1), comprenant les étapes suivantes :
1) fourniture de données de détection par au moins un capteur de vibrations (11) fixé à au moins un composant (12, 14) d'un mécanisme de direction (10) pour un essieu directeur du véhicule (1),
2) détermination d'une perturbation de la route (2) et/ou d'au moins un composant (21, 22, 23, 24, 25) du système de châssis (20) du véhicule (1) sur la base des données de détection du capteur de vibrations (11) par au moins une unité de commande (30),
**caractérisé en ce que**
le procédé comprend au moins une étape suivante :
3) fourniture de modèles de vibrations individuels (s) pour différentes perturbations (I, II**,** III, IV, V) de la route (2) et de différents composants (21, 22, 23, 24, 25) du système de châssis (20) du véhicule (1) par au moins une unité de commande (30).

14. Procédé selon la revendication précédente,
**caractérisé en ce que**
à l'étape 3), les modèles de vibrations individuels (s) pour différentes perturbations (I, II, III, IV, V) du système de châssis (20) du véhicule (1) comprennent des modèles de vibrations (s) pour des perturbations (I, II, III, IV, V) d'une roue (21), d'un roulement de roue (22), d'un pneu (23), d'un mécanisme de suspension (24) et/ou d'une articulation de direction (25), et/ou **en ce que**, à l'étape 3), les modèles de vibrations individuels (s) pour différentes perturbations (I, II, III, IV, V) de la route (2) comprennent des modèles de vibrations (s) pour pluie et neige mêlées, eau, pluie, graviers, bosses ou nids-de-poule sur la route (2).

15. Procédé selon l'une des revendications précédentes,
**caractérisé en ce que**
à l'étape 3), les modèles de vibrations individuels (s) pour différentes perturbations (I, II, III, IV, V) de la route (2) et/ou de différents composants (21, 22, 23, 24, 25) du système de châssis (20) du véhicule (1) sont fournis sous forme de carte.

16. Procédé selon l'une des revendications précédentes,
**caractérisé en ce que**
à l'étape 3), les modèles de vibrations individuels (s) pour différentes perturbations (I, II, III, IV, V) de la route (2) et/ou de différents composants (21, 22, 23, 24, 25) du système de châssis (20) du véhicule (1) sont enregistrés et/ou mis à jour par l'unité de commande (30) en fonction des données de détection actuelles du capteur de vibrations (11) et/ou sont reçus d'une unité de mémoire (31) d'au moins une unité de commande (30).

17. Procédé selon l'une des revendications précédentes,
**caractérisé en ce que**
le procédé comprend au moins une étape suivante :
4) envoi d'une information sur un état déterminé de la route à un bureau de la circulation routière pour le service de construction routière et/ou à un fournisseur de services de navigation pour la mise à jour d'une information concernant la route.

18. Procédé selon l'une des revendications précédentes,
**caractérisé en ce que**
le procédé comprend au moins l'une des étapes suivantes :
5) affichage d'une information sur un état déterminé d'au moins un composant (21, 22, 23, 24, 25) du système de châssis (20) à l'intention d'un utilisateur du véhicule (1) et/ou
6) recommandation pour un utilisateur du véhicule (1) de réparer au moins ce composant (21, 22, 23, 24, 25) du système de châssis (20) en fonction de l'état déterminé de ce composant (21, 22, 23, 24, 25).

19. Véhicule (1) comprenant un système (100) selon l'une des revendications précédentes 1 à 12.
